# EUROPÄISCHE PATENTSCHRIFT

(11) **EP 2 157 295 B1**
(45) Veröffentlichungstag und Bekanntmachung des Hinweises auf die Patenterteilung: **23.03.2011**
(21) Anmeldenummer: 09164708.1
(22) Anmeldetag: 07.07.2009
(51) Int. Cl.: F01N 3/20, B01D 53/90, F04B 43/04

(54) **Dosiersystem für ein flüssiges Medium, insbesondere Harnstoff-Wasser-Lösung**
Metering system for a fluid medium, in particular urea-water solution
Système de dosage pour un milieu liquide, notamment solution urée-eau

(30) Priorität: 21.08.2008 DE 102008041410
(43) Veröffentlichungstag der Anmeldung: 24.02.2010
(73) Patentinhaber: Robert Bosch GmbH, 70442 Stuttgart (DE)
(72) Erfinder: Buerglin, Markus, 71254 Ditzingen (DE)

(56) Entgegenhaltungen:
- WO-A-02/43840
- DE-A1- 4 230 056

## Beschreibung

### Stand der Technik

Die Immissionsgrenzwerte für Stickoxide erfordern vor allem bei schweren Kraftfahrzeugen Abgasnachbehandlungseinrichtungen, die eine selektive katalytische Reduktion (SCR) der in den Rohemissionen der Brennkraftmaschine enthaltenen Stickoxide vornehmen. Dieses sogenannte SCR-Verfahren zur Abgasreinigung ist aus dem Stand der Technik bekannt, sodass auf eine detaillierte Erläuterung der bei diesem Verfahren ablaufenden chemischen Vorgänge verzichtet werden kann.

Ein Beispiel einer solchen Abgasnachbehandlungseinrichtung ist aus der DE 10 2006 012 855 A1 bekannt. Dort wird eine wässerige Harnstofflösung in einem Tank gespeichert und von einer Dosierpumpe und mit Hilfe eines Dosierventils bedarfsabhängig in ein Abgasrohr der Brennkraftmaschine eingedüst. Das aus der DE 10 2006 012 855 A1 bekannte Dosierventil ist druckbetätigt. Dies bedeutet, dass es öffnet, sobald an dem Eingang des Dosierventils ein vorgegebener Öffnungsdruck überschritten wird. Sobald der Öffnungsdruck unterschritten wird, schließt das Dosierventil wieder. Dieses druckbetätigte Dosierventil ist ein "passives" Bauteil, das keine eigene Ansteuerung erfordert. Daher sind keine Signalleitungen bzw. Steuerleitungen von einem Steuergerät zum Dosierventil erforderlich.

Aus der EP 1373 731 B1 und der WO 02/27160 A1 sind Dosiersysteme mit Membranpumpen bekannt bei denen die Membran über einen Elektromotor und einen Exzenterantrieb betätigt wird.

Die WO 02/43840 beschreibt eine Einrichtung zur Nachbehandlung von Abgasen, bei der ein Einspritzorgan über eine Drossel aus einem Hochdruckspeicher mit einem Hilfsmittel zur Abgasnachbehandlung versorgt wird.

### Offenbarung der Erfindung

Der Erfindung liegt der Aufgabe zugrunde, ein Dosiersystem der eingangs genannten Art dahingehend weiterzuentwickeln, dass die Gebrauchseigenschaften, insbesondere die Präzision mit dem Reduktionsmittel in das Abgasrohr eingedüst wird, verbessert wird. Außerdem soll die Dichtheit des Dosierventils während des Betriebs erhöht werden. Des weiteren soll das Dosiersystem auch bei abgestelltem Motor der Brennkraftmaschine und wenn der Tank oberhalb des Dosiersystems angeordnet ist, in Förderrichtung hundertprozentig dicht sein. Ein weiterer Aspekt der Erfindung betrifft eine einfach aufgebaute und trotzdem die Betriebsanforderungen voll erfüllende Dosierpumpe.

Diese Aufgabe wird erfindungsgemäß gelöst bei einem Dosiersystem für ein flüssiges Medium, insbesondere einem flüssigen Reduktionsmittel, wie z.B. einer wässrigen Harnstofflösung (HWL), mit einem Tank, mit einer Dosierpumpe und mit einem Dosierventil, wobei eine Druckseite der Dosierpumpe und das Dosierventil durch eine erste Leitung miteinander verbunden sind und wobei der Tank und eine Saugseite der Dosierpumpe durch eine zweite Leitung miteinander verbunden sind, dadurch gelöst, dass zwischen Dosierpumpe und Dosierventil eine Drossel angeordnet ist. Dabei ist vorgesehen, dass das Dosierventil druckbetätigt ist. Infolge dessen ist keine separate Ansteuerung des Dosierventils erforderlich. Das Dosierventil öffnet, sobald in der ersten Leitung ein Druck ansteht, der größer ist als der Öffnungsdruck des Dosierventils. Eine besonders vorteilhafte Ausgestaltung einer Dosierpumpe sieht vor, dass die Dosierpumpe als Membranpumpe ausgebildet ist, wobei die Membran von einem Anker eines Elektromagneten betätigt wird. Dies bedeutet nichts anderes, als dass die Membran der Membranpumpe beispielsweise direkt von einem Linearaktuator, der Vorteilhafterweise als Elektromagnet mit einem Anker ausgeführt ist, betätigt wird. Dadurch können die aus dem Stand der Technik bekannten Antriebe mit einem Elektromotor und einem Exzenterantrieb entfallen. Infolge dessen ergeben sich erhebliche Kosteneinsparungen und der Bauraumbedarf der erfindungsgemäßen Dosierpumpe wird verringert.

Es ist offensichtlich, dass die erfindungsgemäße Dosierpumpe, welche eine Membranpumpe mit einem beispielsweise elektromagnetisch betätigten Linearaktuator umfasst, unabhängig von der Hydraulik des eingesetzten Dosiersystems ist. Durch die Betätigung der Membranpumpe mit Hilfe eines Elektromagneten, kann die erfindungsgemäße Dosierpumpe die Funktion der Mengenzumessung übernehmen. Dies bedeutet, dass die Dosierpumpe in einen Regelkreis eingebunden sein kann und die Einspritzung von einer ausreichenden Menge Reduktionsmittel auch beim Auftreten von externen Störgrößen gewährleistet ist.

Neben der Zahl der Hübe ist es auch möglich, durch eine geeignete Auswertung von Ansteuerspannung und Ansteuerstrom, insbesondere des zeitlichen Verlaufs der genannten Größen des Elektromagneten den Hub des Ankers und damit auch der Membran zu ermitteln. Infolge dessen ist es möglich die geförderte Menge von flüssigem Reduktionsmittel exakt zu erfassen und gegebenenfalls durch einen geeigneten Regeleingriff bei der Ansteuerung des Elektromagneten den Ist-Wert der Fördermenge an den Soll-Wert anzupassen.

Die erfindungsgemäße Drossel in der ersten Leitung zwischen Dosierpumpe 15 und Dosierventil lässt das flüssige Reduktionsmittel während des Förderhubs in Richtung des Dosierventils passieren. Das heißt, dass die erfindungsgemäße Drossel während des Förderhubs eine ähnliche Wirkungsweise wie ein Rückschlagventil mit Öffnungsrichtung zum Dosierventil hat.

Während des Saughubs der Dosierpumpe, hat die erfindungsgemäße Drossel, anders als ein aus dem Stand der Technik bekanntes Rückschlagventil, die Eigenschaft, einen Druckausgleich zwischen dem Förderraum der Dosierpumpe und dem Dosierventil herzustellen. Da während des Saughubs der Druck im Förderraum der Dosierpumpe unterhalb des Systemdrucks liegt, bedeutet dies weiter, dass während des Saughubs am Dosierventil ein niedriger Druck, der sogar unterhalb des Umgebungsdrucks liegen kann, anliegt. Infolge dessen schließt das Dosierventil nach Beendigung des Förderhubs sehr rasch, da der Öffnungsdruck des Dosierventils rasch und schnell unterschritten wird. Außerdem kann es wegen des niedrigen Drucks in der ersten Leitung während des Saughubs nicht zur unkontrollierten Abgabe von Harnstoff-Wasser-Lösung kommen. Schließlich ist das erfindungsgemäße Dosiersystem sehr einfach und robust aufgebaut.

In weiterer vorteilhafter Ausgestaltung der Erfindung ist parallel zu der Drossel ein erstes Rückschlagventil angeordnet. Da das erste Rückschlagventil in geöffnetem Zustand einen großen Strömungsquerschnitt freigibt und einen kleinen hydraulischen Widerstand darstellt, verringert sich der Strömungswiderstand der erfindungsgemäßen Dosiereinrichtung während des Förderhubs signifikant. Infolge dessen kann durch des erfindungsgemäße

Rückschlagventil die erforderliche Antriebsleistung der Dosierpumpe reduziert werden, ohne die Vorteile der erfindungsgemäßen Drossel aufzugeben.

In weiterer vorteilhafter Ausgestaltung der Erfindung ist in der zweiten Leitung ein zweites Rückschlagventil vorgesehen. Dadurch wird der volumetrische Wirkungsgrad der Dosierpumpe erhöht.

Es hat sich als vorteilhaft erwiesen, sowohl das erste Rückschlagventil als auch das zweite Rückschlagventil als sogenanntes Flatterventil oder Schnüffelvenfil auszubilden. Diese Ventile sind seit Jahrzehnten in verschiedensten Anwendung bewährt und haben sich auch bei dem erfindungsgemäßen Dosiersystem als kostengünstige und zuverlässige und den an sie gestellten Anforderungen voll entsprechende Bauelemente erwiesen.

Ein weiterer Vorteil der erfindungsgemäßen Dosierpumpe besteht darin, dass der Antrieb umfassend den Elektromagnet und den Anker sowie eine Rückstellfeder durch die Membran von dem Reduktionsmittel getrennt sind. Dadurch ist der Antrieb keinem Korrosionsangriff durch das Reduktionsmittel ausgesetzt und auch das Einfrieren des Reduktionsmittels führt nicht zu Beschädigungen des elektrischen Antriebs. Um eventuell auftretende Geräusche der Förderpumpe zu dämmen, kann es vorteilhaft sein, die Dosierpumpe in einer schallschluckenden Umgebung bzw. in einem entsprechenden schallgedämmten Gehäuse unterzubringen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: den schematischen Aufbau eines erfindungsgemäßen Dosiersystems und
- Figuren 2, 3: Ausführungsbeispiele erfindungsgemäßer Dosiersysteme.

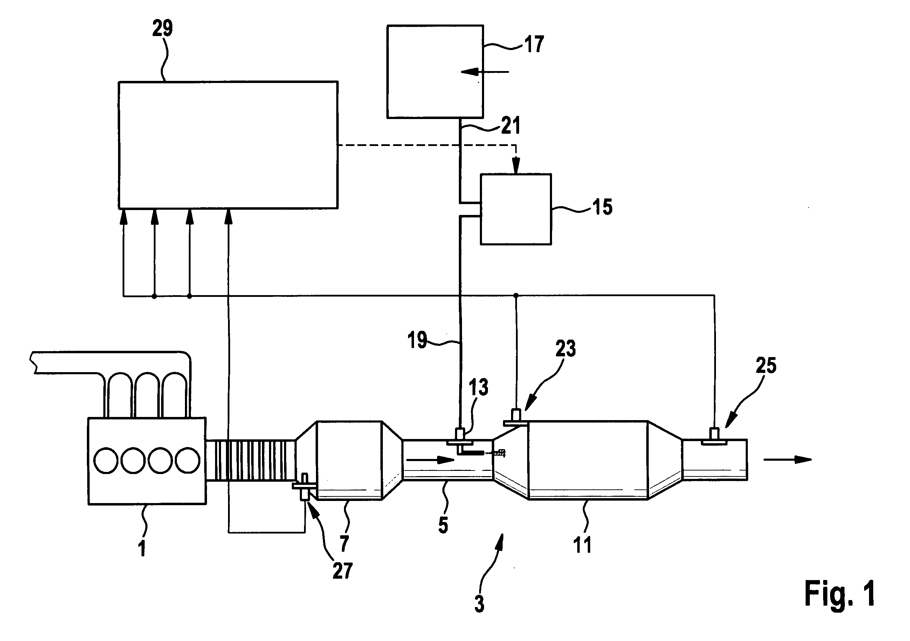

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7 und einen SCR-Katalysator 11. Nicht dargestellt ist ein Partikelfilter, der üblicherweise stromabwärts des Oxidationskatalysators 7 angeordnet wird. Die Strömungsrichtung des Abgases durch das Abgasrohr 5 ist durch Pfeile (ohne Bezugszeichen) angedeutet.

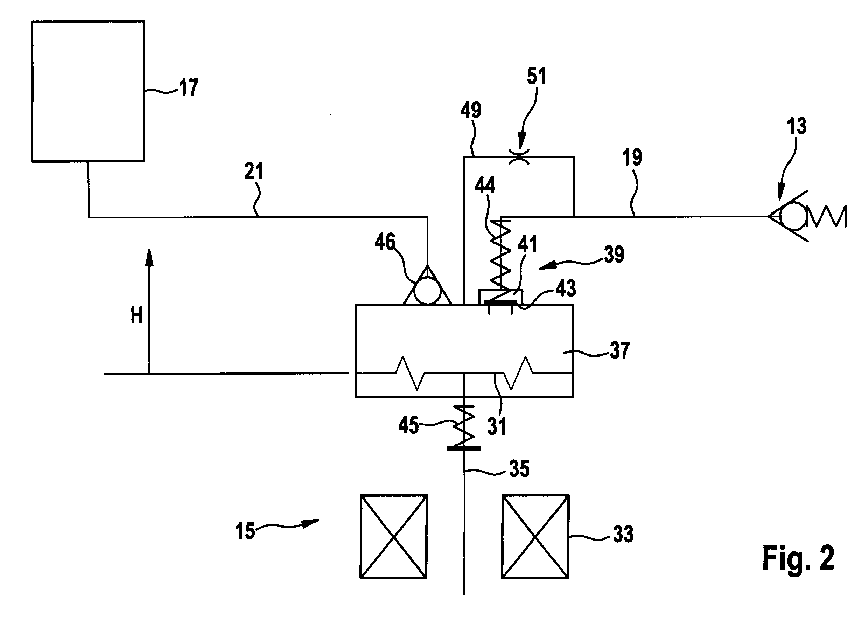

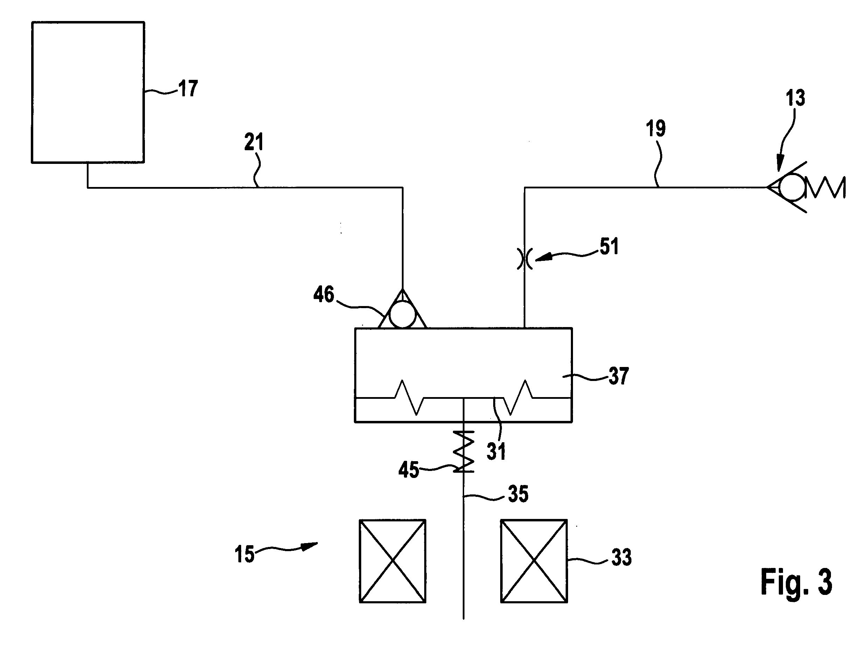

Um den SCR-Katalysator 11 mit Reduktionsmittel zu versorgen, ist stromaufwärts des SCR-Katalysators 11 am Abgasrohr 5 ein Dosierventil 13 für das Reduktionsmittel angeordnet. Das Dosierventil 13 spritzt bei Bedarf Reduktionsmittel stromaufwärts des SCR-Katalysators 11 in das Abgasrohr 5 ein. Bei manchen Anwendungen ist zwischen Dosierventil 13 und SCR-Katalysator 11 noch ein nicht dargestellter Mischer vorgesehen. Das erfindungsgemäße Dosiersystem umfasst das Dosierventil 13, eine Dosierpumpe 15 sowie einen Speicherbehälter 17. Das Dosierventil 13 ist als federbelastetes Ventil schematisch dargestellt. Zwischen der Dosierpumpe 15 und dem Dosierventil 13 ist eine erste Leitung 19 vorgesehen. Zwischen dem Tank 17 und der Dosierpumpe 15 ist eine zweite Leitung 21 vorgesehen. Die Dosierpumpe 15 ist in Figur 1 als "black-box" dargestellt. Details der erfindungsgemäßen Dosierpumpe 15 werden nachfolgend anhand der Figuren 2 und 3 erläutert.

Der Vollständigkeit halber sei noch auf die in der Abgasanlage angeordneten Sensoren, nämlich einen NOX-Sensor 25, sowie Temperatur-Sensoren 23 und 27 hingewiesen. Diese Sensoren 23, 25 und 27 sind über Signalleitungen (ohne Bezugszeichen) mit einem Steuergerät 29 der Brennkraftmaschine verbunden. Dieses Steuergerät 29 steuert die Brennkraftmaschine 1 und unter anderem auch die Dosierpumpe 15. Die Signalverbindung zwischen dem Steuergerät 29 und der Dosierpumpe 15 ist in Figur 1 durch einen gestrichelten Pfeil (ohne Bezugszeichen) dargestellt.

Anhand der Figur 2 wird ein erstes Ausführungsbeispiel eines erfindungsgemäßen Dosiersystems dargestellt und erläutert. Gleiche Bauteile werden mit den gleichen Bezugszeichen versehen und das bezüglich der Figur 1 Gesagte entsprechend.

Die Dosierpumpe 15 ist als Membranpumpe mit einer Membran 31 ausgebildet. Die Membran 31 der Dosierpumpe 15 wird von einem Elektromagneten, umfassend eine Spule 33 und einen Anker 35, betätigt. Wenn die Spule 33 bestromt wird, bewegt sich der Anker 35 und mit ihm die Membran 31 in Figur 2 nach oben und führt einen Förderhub aus. Der Hub H ist in Figur 2 dargestellt. Die in Figur 2 dargestellte Ruheposition der Membran 31 und des Ankers 35 entspricht einem Hub H = 0.

Um den Anker 35 und mit ihm die Membran 31 nach dem Ende des Förderhubs wieder in die Ausgangs- oder Ruheposition zu bringen, ist eine Rückholfeder 45 vorgesehen, die bei dem dargestellten Ausführungsbeispiel mit dem Anker 35 gekoppelt ist.

Zwischen einem Förderraum 37 der Dosierpumpe 15 und der ersten Leitung 19 ist ein erstes Rückschlagventil 39 angeordnet. Das erste Rückschlagventil 39 ist in Figur 2 als Flatterventil umfassend ein Ventilglied 41 und einen Ventilsitz 43 dargestellt. Bei diesen Flatterventilen kann das Ventilglied 41 als elastische Membran ausgebildet sein. Geeignete Werkstoffe sind Kunststoff, wie zum Beispiel EPDM, oder Metall. Eine optionale Feder 44 kann zusätzlich eine Kraft in Schließrichtung des ersten Rückschlagventils 39 auf das Ventilglied 41 ausüben.

In einer Bypass-Leitung 49, die parallel zu dem ersten Rückschlagventil 39 angeordnet ist, ist eine erfindungsgemäße Drossel 51 vorgesehen. Die Drossel 51 ermöglicht einen Druckausgleich zwischen Förderraum 37 und dem Dosierventil 13, so dass durch die Saugbewegung der Membran 31 der am Dosierventil 13 anliegende Druck absinkt. In Folge dessen schließt das Dosierventil 13 schnell und dicht.

Zwischen dem Förderraum 37 und der zweiten Leitung 21 ist ein zweites Rückschlagventil 46 angeordnet, welches verhindert, dass während des Förderhubs der Dosierpumpe 15 Reduktionsmittel aus dem Förderraum 37 in die zweite Leitung 21 und den Tank 17 zurückströmen kann. Dieses zweite Rückschlagventil 46 ist in der Regel nicht federbelastet; es kann jedoch zur Unterstützung seiner Funktion federbelastet sein. Es wird häufig als Flatterventil ausgebildet, obwohl es in Figur 2 und 3 symbolisch als Kugelventil dargestellt ist.

Vorteilhaft an dem Ausführungsbeispiel gemäß Figur 2 ist, dass sich nach der Förderung und Einspritzung des Reduktionsmittels die Membran von ihrem oberen Totpunkt in Richtung des unteren Totpunkts bewegt. Dadurch wird der Druck im Förderraum 37 der Dosierpumpe 15 abgesenkt. Infolge dessen schließt das erste Rückschlagventil 39. Gleichzeitig findet über die Drossel 51 ein Druckausgleich zwischen Förderraum 37 und dem Eingang des Dosierventils 13 statt. Dies bedeutet nichts anderes, als dass der Druck in der ersten Leitung 19 unmittelbar am Eingang des Dosierventils 13 rasch absinkt und infolge dessen das druckgesteuerte Dosierventil 13 rasch und sicher schließt. Bei diesem Ausführungsbeispiel findet kaum ein Transport von Reduktionsmittel durch die Drossel 51 statt. Daher wird der volumetrische Wirkungsgrad der Dosierpumpe bzw. des Dosiersystems durch die Drossel 51 nicht nennenswert beeinflusst. Es hat sich in praktischen Versuchen als vorteilhaft erwiesen, den Öffnungsquerschnitt der Drossel 51 relativ klein zu bemessen. So kann beispielsweise ein Durchmesser von 0,1 mm schon ausreichend sein.

Des weiteren hat es sich als vorteilhaft erwiesen, wenn die Rückstellfeder 45 eine relativ hohe Federkraft auf den Anker 35 ausübt, so dass der Saughub von kurzer Dauer ist und entsprechend geringes Druckniveau im Förderraum 27 und infolge dessen auch in der ersten Leitung 19 während des Saughubs herrscht. Durch eine geeignete Abstimmung des Querschnitts der Drossel 51 und der Rückholfeder 45 ist während des Saughubs sichergestellt, dass der Druck im Förderraum 37 kleiner als in der zweiten Leitung 21 ist und dadurch flüssiges Reduktionsmittel aus dem Tank 17 in den Förderraum angesaugt wird.

Des weiteren kann durch eine geeignete Abstimmung sichergestellt werden, dass der Druckausgleich zwischen erster Leitung 19 bzw. dem Dosierventil 13 und dem Förderraum 37 soweit begrenzt wird, dass auch während des Saughubs noch ein gewisser Haltedruck, der oberhalb des Umgebungsdrucks liegt, in der ersten Leitung 19 herrscht. Dadurch wird die Bildung vom Dampfblasen in dem stromabwärts des ersten Rückschlagventils 39 befindlichen Reduktionsmittel verhindert.

Das zweite Rückschlagventil 46 öffnet erst wenn die Druckdifferenz zwischen Förderraum 37 und zweiter Leitung 21 größer als der Öffnungsdruck des zweiten Rückschlagventils 46 ist. Wenn der Öffnungsdruck des zweiten Rückschlagventils 46 größer als die aus dem geodätischen Höhenunterschied zwischen dem Tank 17 und dem Dosierventil 13 resultierenden Druckdifferenz ist, ist gewährleistet, dass sich der Tank 17 auch dann nicht entleeren kann, wenn die Brennkraftmaschine abgestellt ist und das Dosierventil 13 aufgrund eines Defekts nicht vollständig dicht schließt.

Da die Dosierpumpe 13 nicht in unmittelbarer räumlicher Nähe des Abgasrohrs 5 angeordnet werden muss, kann in dem zweiten Rückschlagventil 46 bzw. dem ersten Rückschlagventil 39 eine Elastomerdichtung eingesetzt werden, so dass diese Ventile dicht schließen.

Vorteilhaft an dem ersten Ausführungsbeispiel ist weiter, dass in Förderrichtung stets große Querschnitte zur Verfügung stehen, so dass mit einem geringen Strömungswiderstand die erforderliche Menge von Reduktionsmittel durch das Dosierventil 13 in das Abgasrohr 5 eingespritzt werden kann.

In Figur 3 ist ein weiteres Ausführungsbeispiel eines erfindungsgemäßen Dosiersystems dargestellt. Bei diesem Ausführungsbeispiel ist die Drossel 51 anstelle des ersten Rückschlagventils 39 in der ersten Leitung 19 angeordnet. Die Förderung von Reduktionsmittel erfolgt somit durch die Drossel 51 zu dem Dosierventil 13.

Wenn nun die Förderung beendet wurde und die Membran 31 von der Rückholfeder 45 wieder in ihre Ausgangslage zurückbewegt wird, findet zwischen Förderraum 37 und Dosierventil 13 ein Druckausgleich statt, so dass am Dosierventil 13 etwa der gleiche Druck wie im Förderraum 37 herrscht. Aufgrund der Drossel 51 herrscht am Dosierventil 13 während des Saugvorgangs ein höherer Druck als im Förderraum 37. In Folge dessen wird am Dosierventil 13 ein Haltedruck sichergestellt und in Folge dessen die Siedetemperatur auf über 100°C erhöht. Dadurch schließt das Dosierventil 13 sehr rasch und vollständig, so dass kein Reduktionsmittel unkontrolliert in das Abgasrohr 5 gelangt.

Dieses Ausführungsbeispiel besticht durch seinen einfachen Aufbau und die daraus resultierende Robustheit auch unter ungünstigen Betriebsbedingungen.

## Patentansprüche

1. Dosiersystem für ein flüssiges Medium, insbesondere einem flüssigen Reduktionsmittel, wie zum Beispiel eine wässrige Harnstoff-Wasser-Lösung (HWL), mit einem Tank (17), mit einer Dosierpumpe (15) und mit einem Dosierventil (13), wobei eine Druckseite der Dosierpumpe (15) und das Dosierventil (13) durch eine erste Leitung (19) miteinander verbunden sind und wobei der Tank (17) und eine Saugseite der Dosierpumpe (15) durch eine zweite Leitung (21) miteinander verbunden sind, wobei zwischen Dosierpumpe (15) und Dosierventil (13) eine Drossel (51) angeordnet ist, **dadurch gekennzeichnet, dass** das Dosierventil (13) druckbetätigt ist, dass die Dosierpumpe als Membranpumpe ausgebildet ist und daß die Membranpumpe (15) von einem Anker (35) eines Elektromagneten (33) betätigt wird.

2. Dosiersystem nach Anspruch 1, **dadurch gekennzeichnet, dass** die Drossel (51) in der ersten Leitung (19) angeordnet ist.

3. Dosiersystem nach Anspruch 1 oder 2, **dadurch gekennzeichnet, dass** parallel zu der Drossel (51) ein erstes Rückschlagventil (39) angeordnet ist.

4. Dosiersystem nach Anspruch 3, **dadurch gekennzeichnet, dass** das erste Rückschlagventil (39) federbelastet ist.

5. Dosiersystem nach einem der vorhergehenden Ansprüche, **dadurch gekennzeichnet, dass** in der zweiten Leitung (21) ein zweites Rückschlagventil (46) vorgesehen ist.

6. Dosiersystem nach Anspruch 5, **dadurch gekennzeichnet, dass** das erste Rückschlagventil (39) und/oder das zweite Rückschlagventil (46) als Flatter- oder Schnüffelventil ausgebildet ist.

7. Dosiersystem nach einem der vorhergehenden Ansprüche, **dadurch gekennzeichnet, dass** die Membranpumpe (15) eine Rückholfeder (45) umfasst.

8. Dosiersystem nach Anspruch 7, **dadurch gekennzeichnet, dass** die Rückholfeder (45) einenends mit dem Anker (35) des Elektromagneten (33) gekoppelt ist.

## Claims

1. Dosing system for a liquid medium, in particular a liquid reducing agent such as for example an aqueous urea-water solution (HWL), having a tank (17), having a dosing pump (15) and having a dosing valve (13), with a pressure side of the dosing pump (15) and the dosing valve (13) being connected to one another by means of a first line (19), and with the tank (17) and a suction side of the dosing pump (15) being connected to one another by means of a second line (21), with a throttle (51) being arranged between the dosing pump (15) and dosing valve (13), **characterized in that** the dosing valve (13) is pressure-actuated, **in that** the dosing pump is designed as a diaphragm pump, and **in that** the diaphragm pump (15) is actuated by an armature (35) of an electromagnet (33).

2. Dosing system according to Claim 1, **characterized in that** the throttle (51) is arranged in the first line (19).

3. Dosing system according to Claim 1 or 2, **characterized in that** a first check valve (39) is arranged parallel to the throttle (51).

4. Dosing system according to Claim 3, **characterized in that** the first check valve (39) is spring-loaded.

5. Dosing system according to one of the preceding claims, **characterized in that** a second check valve (46) is provided in the second line (21).

6. Dosing system according to Claim 5, **characterized in that** the first check valve (39) and/or the second check valve (46) are/is designed as a flutter valve or snifter valve.

7. Dosing system according to one of the preceding claims, **characterized in that** the diaphragm pump (15) comprises a restoring spring (45).

8. Dosing system according to Claim 7, **characterized in that** the restoring spring (45) is coupled at one end to the armature (35) of the electromagnet (33).

## Revendications

1. Système de dosage pour un milieu fluide, en particulier un agent réducteur fluide, par exemple une solution aqueuse d'urée et d'eau (SUE), comprenant un réservoir (17), une pompe de dosage (15) et une soupape de dosage (13), un côté de pression de la pompe de dosage (15) et la soupape de dosage (13) étant connectés l'un à l'autre par une première conduite (19) et le réservoir (17) et un côté d'aspiration de la pompe de dosage (15) étant connectés l'un à l'autre par une deuxième conduite (21), un étranglement (51) étant disposé entre la pompe de dosage (15) et la soupape de dosage (13), **caractérisé en ce que** la soupape de dosage (13) est actionnée par la pression, **en ce que** la pompe de dosage est réalisée sous forme de pompe à membrane et **en ce que** la pompe à membrane (15) est actionnée par une armature (35) d'un électroaimant (33).

2. Système de dosage selon la revendication 1, **caractérisé en ce que** l'étranglement (51) est disposé dans la première conduite (19).

3. Système de dosage selon la revendication 1 ou 2, **caractérisé en ce qu'**un premier clapet anti-retour (39) est disposé parallèlement à l'étranglement (51).

4. Système de dosage selon la revendication 3, **caractérisé en ce que** le premier clapet anti-retour (39) est sollicité par ressort.

5. Système de dosage selon l'une quelconque des revendications précédentes, **caractérisé en ce qu'**un deuxième clapet anti-retour (46) est prévu dans la deuxième conduite (21).

6. Système de dosage selon la revendication 5, **caractérisé en ce que** le premier clapet anti-retour (39) et/ou le deuxième clapet anti-retour (46) sont réalisés sous forme de soupape flottante anti-retour ou de reniflard.

7. Système de dosage selon l'une quelconque des revendications précédentes, **caractérisé en ce que** la pompe à membrane (15) comprend un ressort de rappel (45).

8. Système de dosage selon la revendication 7, **caractérisé en ce que** le ressort de rappel (45) est accouplé à une extrémité à l'armature (35) de l'électroaimant (33).
